Europäisches Patentamt

European Patent Office

Office européen des brevets

(19)

(11) **EP 1 138 645 A2**

(12) # DEMANDE DE BREVET EUROPEEN

(43) Date de publication:
**04.10.2001 Bulletin 2001/40**

(51) Int Cl.⁷: **C04B 26/26**, E01C 7/18, C08L 95/00, C09K 3/10

(21) Numéro de dépôt: **01400820.5**

(22) Date de dépôt: **30.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **31.03.2000 FR 0004113**

(71) Demandeur: **l'Auxiliaire du Maitre d'Ouvrage 75015 Paris (FR)**

(72) Inventeurs:
• **de Fay, Thierry 78390 Trappes (FR)**
• **Croyere, Ghislain 75116 Paris (FR)**

(74) Mandataire: **Le Roux, Martine et al Cabinet Beau de Loménie 158, rue de l'Université 75340 Paris Cédex 07 (FR)**

(54) **Complexe d'étanchéite à base d'un béton bitumineux coulé , sa préparation et utilisation**

(57) La présente invention a pour objet un complexe d'étanchéité (1a) comportant deux couches, une couche inférieure élastique (1'a) et une couche supérieure apte à supporter les charges (1"a), caractérisé en ce que:

+ ladite couche inférieure (1'a) est en un bitume-polymère (3), dont la teneur en fines (2') est faible voire nulle ; et

+ ladite couche supérieure (1"a) est du type béton bitumineux coulé, à base d'un bitume-polymère (3) et d'une charge minérale (2 + 2'), à faible teneur en fines (2').

Elle a également pour objet des procédés de préparation et d'utilisation dudit complexe (1a) ainsi que ledit béton bitumineux coulé à base d'un bitume-polymère (3) et d'une charge minérale (2 + 2'), à faible teneur en fines (2').

FIG.1C

EP 1 138 645 A2

**Description**

La présente invention a pour objet un complexe d'étanchéité original, susceptible d'exister sous différentes variantes, des procédés pour la préparation dudit complexe, sous ses différentes variantes, ainsi que des procédés d'utilisation dudit complexe.

La présente invention a également pour objet un nouveau béton bitumineux coulé.

Le concept du complexe d'étanchéité original repose sur la structure originale dudit nouveau béton bitumineux coulé.

Les bétons bitumineux, produits essentiellement composés d'un liant bitumineux et d'une charge minérale (charpente de grains minéraux), généralement obtenus par mélange à chaud dudit liant et de ladite charge dans un malaxeur, sont des produits familiers à l'homme du métier. On distingue deux familles de béton bitumineux :

- celle des bétons bitumineux compactés, couramment appelés enrobés bitumineux (lesdits enrobés présentent, dans leur structure, des vides communiquant entre eux ; ils ne sont pas étanches. Les demandes de brevet EP-A-0 381 903 et FR-A-2 789 705 décrivent des structures drainantes à base de tels enrobés), et
- celle des bétons bitumineux coulés, couramment appelés asphaltes coulés (lesdits asphaltes coulés sont des matériaux pleins, étanches. L'invention présentement revendiquée se situe dans leur contexte).

Lesdits bétons bitumineux coulés, qui présentent dans leur structure un pourcentage de vides quasi-nul (leur charge minérale étant à granulométrie continue, riche en fines (destinées à se loger entre les grains de plus grande dimension) et le bitume intervenant en une quantité suffisante pour remplir les vides de la charpente minérale), sont des matériaux pleins, étanches.

Leur intervention dans la structure de matériaux d'étanchéité est classique.

Les matériaux d'étanchéité, circulables ou non, existent selon de nombreuses variantes. Ils présentent généralement une structure bi-couche, dans la mesure où ils doivent, d'une part, être capables de se déformer sans se rompre, sous l'effet des contraintes du support sur lequel ils interviennent et, d'autre part, être capables de supporter des charges, de résister au poinçonnement. Ladite structure bi-couche associe donc une couche inférieure élastique, d'étanchéité et une couche supérieure, de résistance, dure. Ainsi, existe-t-il, pour des revêtements circulables, les structures bi-couches ci-après :

- pour des revêtements en asphalte, une structure qui comprend une couche inférieure dite d'étanchéité, en asphalte dit pur (mélange de bitume et de fines) et une couche supérieure de protection en asphalte gravillonné (mélange de bitume et d'une charge minérale à granulométrie continue) ;
- pour des revêtements réalisés avec des membranes : une structure constituée d'une ou plusieurs membranes bitumineuses, positionnées sous une couche de protection dure en béton, constituée de dalles préfabriquées ou d'une forme coulée.

On a également proposé d'utiliser, à titre de matériau d'étanchéité, des dalles de béton jointoyées entre elles par un mastic, généralement bitumineux. Mais ce système s'est révélé insuffisamment étanche du fait de la rigidité desdites dalles.

Il est en fait apparu indispensable de toujours disposer, sous la couche de circulation, une sous-couche étanche.

Dans un tel contexte, les inventeurs ont réalisé l'opportunité de l'intervention d'un béton bitumineux coulé original - à base d'un bitume-polymère et dont la charge minérale est à granulométrie discontinue, pauvre en fines - et ont conçu des complexes d'étanchéité bi-couches, à propriétés élastiques optimisées. Lesdits complexes bi-couches peuvent être obtenus, selon une variante avantageuse de préparation, à partir d'un unique liant bitumineux - à base d'un bitume-polymère et dont la charge minérale est à granulométrie discontinue, pauvre en fines - en une seule opération de coulage.

Par bitume-polymère, on entend dans la présente description et les revendications annexées, un liant bitumineux résultant du mélange d'au moins un bitume et d'au moins un polymère. Les bitumes-polymères sont *per se* connus.

Les complexes d'étanchéité de l'invention comportent, de façon classique, deux couches :

- une couche inférieure élastique ; et
- une couche supérieure apte à supporter les charges.

De façon caractéristique, lesdites deux couches - inférieure et supérieure - présentent les caractéristiques ci-après :

- ladite couche inférieure est en un bitume-polymère, dont la teneur en fines est inférieure à 20 % en poids, avantageusement inférieure à 15 % en poids, très avantageusement voisine de ou égale à 0 % en poids. Ladite couche inférieure est donc de préférence exempte de fines. En tout état de cause, on a le rapport, poids de fines/poids de bitume-polymère de ladite couche inférieure, inférieur à 20 % ;

- ladite couche supérieure est du type béton bitumineux coulé, à base d'un bitume-polymère et d'une charge minérale à faible teneur en fines, de sorte que le poids total des fines contenues dans ladite couche supérieure représente moins de 20 %, avantageusement moins de 15 %, du poids dudit bitume-polymère de ladite couche supérieure. La charge minérale intervenante présente une granulométrie discontinue ; elle est pauvre en fines de sorte que l'on retrouve peu de fines dans ladite couche supérieure.

De façon caractéristique, dans chacune desdites deux couches inférieure et supérieure, le bitume intervenant est un bitume-polymère et la teneur en fines est minimisée, elle est inférieure à celle des couches correspondantes de complexes analogues de l'art antérieur.

Le béton bitumineux coulé de la couche supérieure n'est pas un béton bitumineux coulé de l'art antérieur, dans la mesure où il renferme moins de fines et où le bitume intervenant est un bitume du type bitume-polymère. Ledit béton bitumineux coulé original constitue un des objets de la présente invention. Ledit béton bitumineux coulé original est plus riche en bitume que les bétons bitumineux coulés de l'art antérieur...

Selon une variante préférée, les teneurs en fines desdites couches inférieure et supérieure sont inférieures ou égales à 10 % en poids, voire inférieure ou égale à 5 % en poids, ces pourcentages étant comme précédemment rapportés au poids de bitume-polymère intervenant dans chacune desdites couches inférieure et supérieure. Des teneurs en fines aussi basses sont obtenues par intervention, lors de la préparation du complexe, d'une charge minérale très pauvre en fines, renfermant généralement moins de 2 % en poids desdites fines.

A toutes fins utiles, on rappelle ici que le vocabulaire, les définitions et les classifications concernant les granulats (ensemble de grains dont les dimensions sont comprises entre 0 et 80 mm) sont indiqués dans la norme AFNOR P 18-101 et que conformément à ladite norme, une classe granulaire est définie par les deux dimensions, d et D, qui représentent respectivement la plus petite et la plus grande des dimensions requises pour les grains dudit granulat. Ledit granulat est alors désigné granulat d/D. Conformément à cette norme, les fines sont des granulats d/D = 0/D avec D ≤ 0,080 mm.

On a adopté cette définition pour le terme "fines" utilisé dans la présente description et les revendications annexées.

A la lecture de ce qui précède, l'homme du métier aura déjà saisi l'originalité des complexes d'étanchéité de l'invention et leur intérêt. Lesdits complexes sont obtenus à partir de bitume(s)-polymère(s) et d'une charge minérale, pauvre en fines. Leurs propriétés d'élasticité sont optimisées de par la présence dudit (desdits) bitume(s)-polymère(s) et la faible concentrations de fines.

On peut indiquer ici, en référence à leur structure globale, que le(les) bitume(s)-polymère(s) (dans lesdites couches supérieure et inférieure) occupe(nt) généralement au moins 30 % de leur volume.

On se propose de donner ci-après quelques précisions sur les bitumes-polymères et les charges minérales, susceptibles d'intervenir dans la structure bi-couche des complexes d'étanchéité selon l'invention.

La charge minérale de la couche supérieure est généralement constituée de granulats minéraux, naturels ou artificiels, concassés ou roulés (avantageusement roulés), non lavés ou lavés (avantageusement lavés). Il n'est pas totalement exclu de faire intervenir dans la structure des complexes de l'invention des minéraux, plus gros que des granulats, au sens de la norme AFNOR P 18-101 évoquée ci-dessus. En tout état de cause, on comprendra que la grosseur des minéraux est limitée par l'épaisseur de la couche appelée à les contenir. On ne fait généralement pas intervenir de minéraux dont l'une des dimensions est supérieure à la moitié de ladite épaisseur.

On a, en fait, avantageusement, au moins 95 % en poids de la charge minérale du béton bitumineux coulé, constitutif de la couche supérieure, qui présente une granulométrie d/D, avec :

d ≥ 10 % de l'épaisseur du complexe ; et

D ≤ 50 % de ladite épaisseur.

On rappelle que ladite charge minérale est pauvre en fines. Pour l'obtention de bitumes (dans les couches supérieure et inférieure des complexes de l'invention) renfermant moins de 20 %, avantageusement moins de 15 %, en poids de fines, ladite charge minérale renferme généralement moins de 4 %, avantageusement moins de 3 % en poids de telles fines. De façon préférée, elle renferme moins de 2 % en poids, de façon encore plus préférée, moins de 1 % en poids, de telles fines (d/D = 0/D avec D ≤ 0,080 mm).

Selon une variante préférée, la charge minérale comprend les 95 % en poids précisés ci-dessus avec moins de 2 %, avantageusement moins de 1 %, de fines.

Pour ce qui concerne les bitumes-polymères susceptibles d'intervenir, il s'agit de bitumes-polymères ou bitumes-élastomères, connus *per se,* susceptibles de résister aux températures auxquelles ils doivent être utilisés lors de l'élaboration du complexe. Ainsi, convient-il que le bitume-polymère à mélanger et malaxer avec la charge minérale résiste aux températures de mise en oeuvre d'un tel mélange, d'un tel malaxage.

Le bitume intervenant est généralement un bitume ou mélange de bitumes de pétrole, plus ou moins oxydé.

Les polymères en cause sont généralement le styrène-butadiène-styrène (SBS), des polyoléfines tels que le polybutylène, le polypropylène atactique (APP).

Ainsi, les bitumes-polymères susceptibles d'intervenir dans les couches supérieure et inférieure du complexe de l'invention sont-ils avantageusement choisis parmi les bitumes-SBS, les bitumes-polyoléfines tels les bitumes-polybutylène et les bitumes-polypropylène atactique et leurs mélanges. Les bitumes-SBS renferment généralement de 8 à 20 %, en poids, de SBS ; les bitumes-APP (polypropylène atactique) de 20 à 40 % d'APP.

Des bitumes-polymères différents peuvent intervenir dans les couches inférieure et supérieure du complexe d'étanchéité de l'invention. Avantageusement, il intervient dans les deux couches le même bitume-polymère. Ceci peut résulter d'un choix délibéré dans le cadre de la mise en oeuvre d'un procédé de préparation du complexe selon lequel les deux couches sont successivement élaborées de manière indépendante ; ceci est inéluctable dans le cadre de la mise en oeuvre d'un procédé de préparation du complexe (qui comprend une unique opération de coulage) selon lequel les deux couches sont élaborées en même temps. A l'issue d'une telle mise en oeuvre, décrite en détail ci-après, on obtient un complexe de l'invention dont les deux couches ne sont pas individualisées, un complexe de l'invention qui présente une structure parfaitement continue (en référence, tout particulièrement, au bitume-polymère intervenant). Un complexe de ce type est tout particulièrement préféré. Son procédé de préparation, original, est décrit plus loin.

Pour en terminer avec la description générale des complexes d'étanchéité de l'invention et préciser quelque peu la composition des bétons bitumineux coulés originaux de l'invention, on peut indiquer, de façon nullement limitative, qu'au sein desdits bétons bitumineux coulés, qu'au sein de la couche supérieure desdits complexes, la charge minérale, pauvre en fines (dont la teneur en fines est généralement inférieure à 4 % en poids, avantageusement inférieure à 3 % en poids et de façon particulièrement préférée inférieure ou égale à 2 % en poids, voire inférieure ou égale à 1 % en poids), occupe généralement moins de 70 % en volume desdits bétons bitumineux coulés, de ladite couche supérieure.

On peut également ajouter que les mélanges polymère/bitume/charge minérale intervenant dans l'élaboration des complexes de l'invention sont susceptibles de renfermer, de façon connue en soi, un adjuvant tensioactif, à base d'ammonium quaternaire par exemple. Ledit adjuvant est destiné à favoriser l'adhérence du bitume-polymère sur la surface des composants de la charge minérale.

On se propose maintenant de décrire des procédés convenant à la préparation des complexes décrits ci-dessus. Lesdits complexes peuvent être préparés en amont de leur utilisation, dans des moules ou générés *in situ* sur leur site d'utilisation. Lesdits complexes peuvent, de manière générale, être préparés par des procédés que nous qualifierons de procédés par analogie (procédés au cours desquels on génère successivement et indépendamment les couches inférieure et supérieure) ou par un procédé tout à fait original (qui comprend une unique opération de coulage, à l'issue de laquelle on génère en même temps lesdites deux couches).

On précise ci-après les étapes desdits procédés par analogie. Selon une première variante :

- on coule dans un moule, pour générer une première couche, un mélange apte à générer un béton bitumineux coulé (au sens de l'invention), un mélange qui résulte du malaxage à chaud d'une charge minérale adéquate (à faible teneur en fines) et d'un bitume-polymère, ledit bitume-polymère intervenant en une quantité égale ou à peine supérieure à celle nécessaire au remplissage des vides de ladite charge minérale ;
- on laisse quelque peu refroidir ladite première couche ;
- on coule sur celle-ci un bitume-polymère, (à faible teneur en fines, voire exempt de fines) apte à générer une seconde couche ;
- on laisse refroidir le complexe bi-couche ainsi obtenu ;
- on le démoule.

Dans le cadre de cette première variante, on peut ou non faire intervenir dans les première et seconde couches le même bitume-polymère.

Le complexe obtenu est, pour son utilisation, retourné dans la mesure où la première couche est la couche de roulement (couche dure).

Selon une seconde variante :

- on coule dans un moule, pour générer une première couche, un bitume-polymère (à faible teneur en fines, voire exempt de fines) ;
- on laisse quelque peu refroidir ladite première couche ;
- on coule sur ladite première couche, en ledit bitume-polymère, un mélange apte à générer un béton bitumineux coulé (au sens de l'invention), un mélange qui résulte du malaxage à chaud d'une charge minérale adéquate (à faible teneur en fines) et d'un bitume-polymère, ledit bitume-polymère intervenant en une quantité égale ou à peine supérieure à celle nécessaire au remplissage des vides de ladite charge minérale ;

- on laisse refroidir le complexe bi-couche ainsi obtenu ;
- on le démoule.

Dans le cadre de cette seconde variante, on peut ou non faire intervenir dans les première et seconde couches le même bitume-polymère.

Le complexe obtenu n'a pas à être retourné, pour son utilisation. La première couche générée dans le moule correspond à la couche inférieure dudit complexe.

Cette seconde variante peut être mise en oeuvre *in situ* pour le revêtement d'une surface, le complexe étant alors réalisé directement sur ladite surface (ou sur un écran d'indépendance, prévu sur ladite surface).

On se propose maintenant de décrire un procédé original en lui-même qui conduit à l'obtention de complexes de l'invention présentant une structure parfaitement continue. Selon ledit procédé, on coule une unique charge et on génère les deux couches du complexe en même temps. Selon ledit procédé :

- on malaxe à chaud une charge minérale adéquate (à faible teneur en fines) et un bitume-polymère ; ledit bitume-polymère intervenant en une quantité excédentaire par rapport à la quantité nécessaire au remplissage des vides de ladite charge minérale (à la quantité nécessaire pour générer un béton bitumineux coulé). (L'excédent de bitume-polymère est évidemment destiné à constituer la couche inférieure du complexe final, démoulé et retourné) ;
- on coule le mélange obtenu dans un moule ;
- on laisse refroidir, de façon contrôlée, ledit mélange dans ledit moule. Le refroidissement est contrôlé pour éviter une prise en masse trop rapide, pour autoriser la décantation de la charge minérale, dans la partie basse du moule, pour générer ainsi dans ledit moule, une couche inférieure du type béton bitumineux coulé, au sens de l'invention et une couche supérieure quasi-exempte de charges, en fait exempte de charges, types sables, gravillons, cailloux, graves (de grande dimension, qui décantent) et ne renfermant que des fines (qui ne décantent pas).

Il intervient ici un unique bitume-polymère. Le complexe obtenu l'est à l'envers. Après son démoulage, il doit être retourné, pour son utilisation. La décantation de la charge minérale doit être possible. Elle est rendue possible par la faible teneur en fines du liant bitumineux intervenant et par la mise en oeuvre d'un refroidissement contrôlé.

Une telle mise en oeuvre fait par exemple intervenir des moules calorifugés, des moules dans les parois desquels on a mis en circulation un fluide caloporteur... L'homme du métier est à même de concevoir des moules adéquats pour le contrôle du refroidissement de la charge coulée.

Le complexe ainsi généré renferme inéluctablement des fines dans sa couche inférieure (couche supérieure à l'intérieur du moule).

Quel que soit le procédé en cause, il ne doit pas impliquer de détérioration du(des) liant(s) bitumineux intervenant. Les températures de malaxage, coulage restent ainsi généralement dans la fourchette 180°C-210°C, avantageusement dans la fourchette réduite 180°C-190°C.

Quel que soit le procédé en cause, la charge minérale qui intervient renferme avantageusement moins de 2 %, très avantageusement moins de 1 % en poids de fines.

Les moules utilisés permettent avantageusement, de par leur forme, d'une part, un démoulage aisé et, d'autre part, l'obtention de complexes dont la couche inférieure présente une languette, destinée à servir de fond de joint (pour l'obtention de ce résultat, on fait généralement plutôt appel, de façon classique, à des pièces jouant le rôle de contre-moule).

Les complexes de l'invention se présentent généralement sous la forme de plaques ou dalles, rectangulaires. Ils peuvent en fait avoir toute forme. Ils ont généralement des formes conjuguées, de sorte qu'ils coopèrent entre eux, qu'ils puissent être jointoyés.

Le mode d'utilisation des complexes de l'invention pour revêtir une surface n'est pas *per se* innovant. Il l'est de par l'intervention desdits complexes.

Selon un autre de ses objets, la présente invention concerne donc un procédé de revêtement d'une surface, en vue de la protéger et généralement de l'étancher. Ledit procédé comprend le revêtement de ladite surface avec un complexe d'étanchéité de l'invention (généré en amont) ou la préparation, sur ladite surface, d'un tel revêtement (voir plus haut).

Ledit revêtement de ladite surface avec un complexe de l'invention généré en amont est une pose sur chantier classique. Les complexes sont disposés sur la surface à étancher, suffisamment espacés les uns des autres (par exemple de 10 mm) pour permettre de disposer entre eux un joint.

Les joints sont généralement posés lorsque l'ensemble des complexes est en place. Il peut s'agir de joints bitumineux, de joints mastiqués, de joints type résine époxy.

Les revêtements à base des complexes de l'invention conviennent pour étancher un élément porteur. Cet élément porteur peut notamment être un plancher de bâtiment, un balcon, une toiture terrasse plate ou en pente, un plancher de parking, un shed, une dalle d'ouvrage de génie civil, une dalle de tranchée ouverte, un pont. Le matériau constitutif de l'élément porteur peut être indifféremment du béton, du béton armé, du béton précontraint, du béton cellulaire, de la céramique, du métal, du bois ou des dérivés du bois.

Les revêtements de l'invention conviennent également pour revêtir une couche de fondation ou une couche de forme d'une voie de circulation. Ils conviennent aussi pour revêtir un mur, destiné ou non à être enterré.

Ils interviennent généralement pour étancher une surface horizontale, inclinée, voire verticale, éventuellement déjà munie d'un revêtement d'isolation thermique ou phonique. Ils peuvent aussi intervenir sur un revêtement d'étanchéité, pour constituer une couche protectrice de celui-ci... Le domaine d'utilisation des complexes d'étanchéité de l'invention est très vaste.

Pour ce qui concerne le dernier objet de la présente invention, on a déjà compris qu'il s'agit du béton bitumineux coulé original, constitutif de la couche supérieure de complexes d'étanchéité de l'invention. Ledit béton bitumineux coulé est essentiellement constitué d'un liant bitumineux et d'une charge minérale. De façon caractéristique:

- ledit liant bitumineux est un bitume-polymère (résultant du mélange d'au moins un bitume et d'au moins un polymère) ; et
- ladite charge minérale est à faible teneur en fines, de sorte que le poids total desdites fines dans ledit liant bitumineux représente moins de 20 % en poids, avantageusement moins de 15 % en poids, du poids dudit liant bitumineux.

Ladite charge minérale, pour conduire à une telle teneur en fines, renferme généralement moins de 4 % en poids, avantageusement moins de 3 % en poids, de fines. Elle renferme très avantageusement, comme déjà indiqué, moins de 2 % en poids en fines, et de façon particulièrement préférée, moins de 1 %. Dans le cadre de ces variantes très avantageuse et particulièrement préférée, le poids total des fines dans le liant bitumineux représente respectivement au plus 10 %, au plus 5 %, du poids dudit liant bitumineux.

Un tel béton bitumineux coulé, dont la charge minérale est à granulométrie discontinue, ne s'inscrit pas dans le contexte des bétons bitumineux coulés de l'art antérieur, dont la charge minérale est à granulométrie continue. Au sein de sa structure, il n'y a pas optimisation du remplissage des espaces entre les gros grains par les plus petits grains.

On se propose maintenant d'illustrer l'invention, de façon nullement limitative, par les figures annexées.

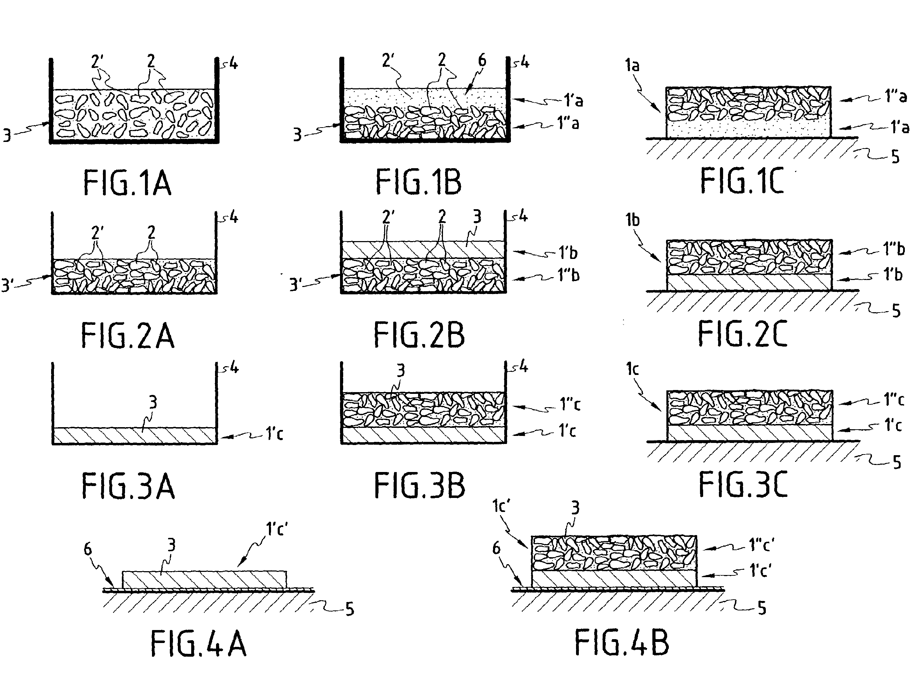

Les figures 1A, 1B, 1C illustrent (en coupe) une variante de mise en oeuvre du mode de préparation d'un complexe de l'invention, mode selon lequel on coule une unique charge et on génère les deux couches superposées en même temps. La figure 1C montre en coupe le complexe original obtenu.

Les figures 2A, 2B, 2C illustrent (en coupe) une variante de mise en oeuvre du mode de préparation d'un complexe de l'invention, mode selon lequel on coule successivement deux charges et on génère successivement les deux couches superposées. La figure 2C montre en coupe le complexe original obtenu.

Les figures 3A, 3B, 3C illustrent (en coupe) une variante de mise en oeuvre d'un autre mode de préparation d'un complexe de l'invention, mode selon lequel on coule aussi successivement deux charges et on génère aussi successivement les deux couches superposées. La figure 3C montre en coupe le complexe original obtenu (du type de celui de la figure 2C).

Les figures 4A et 4B illustrent enfin (en coupe) la préparation d'un complexe de l'invention, sur son site d'utilisation. Le procédé mis en oeuvre est celui des figures 3A à 3C. Le produit obtenu, montré sur la figure 4B, est du type de celui, montré sur la figure 3C (et de celui montré sur la figure 2C).

Figures 1A, 1B, 1C

Dans un moule 4, on a coulé un mélange, malaxé à chaud, d'une charge minérale 2 + 2', pauvre en fines 2' et d'un bitume-polymère 3. Ledit moule 4 a ses parois calorifugées de sorte que le refroidissement de la charge coulée en son sein n'est pas trop rapide. Le bitume-polymère 3 intervient en excès par rapport aux vides de la charge minérale 2 + 2'. Au sein dudit moule 4, le mélange coulé est laissé à refroidir (Figure 1A).

A l'issue du refroidissement contrôlé, la charge minérale 2 + 2', et plus précisément ses plus gros éléments 2, a décanté, au fond du moule 4. La décantation n'a pas été perturbée par les fines 2', les propriétés élastiques du bitume-polymère ne sont pas affectées par lesdites fines 2', dans la mesure où elles interviennent en quantité limitée. Ladite décantation a généré deux couches 1'a et 1"a.

L'excès de bitume-polymère 3 se trouve en surface, chargé en fines 2'. L'épaisseur de la couche supérieure, ici 1'a, dans le moule 4 est déterminée par le volume de cet excès. A l'issue de cette étape du procédé, on obtient un complexe 1a de l'invention, à l'envers, dans son moule de fabrication. (Figure 1B).

Ledit complexe 1a doit encore être démoulé et retourné pour son utilisation, sur une surface 5. Il présente alors sa couche inférieure 1'a, en bitume-polymère 3 chargé en fines 2', et, sa couche supérieure 1"a, en un béton bitumineux coulé original de l'invention. Lesdites couches 1'a et 1"a n'ont pas vraiment d'individualité. La structure bitumineuse du complexe la a est parfaitement continue.

Figures 2A, 2B, 2C

Dans un moule 4, on a coulé un mélange apte à générer un béton bitumineux coulé (de l'invention). Ledit mélange résulte du malaxage à chaud d'un bitume-polymère 3' et d'une charge minérale 2 + 2', pauvre en fines 2'.

Le bitume-polymère 3' intervient en une qualité à peine supérieure à celle nécessaire au remplissage des vides de ladite charge minérale 2 + 2'. Ledit mélange est laissé à refroidir (Figure 2A).

Sur la couche 1"b ainsi générée, quelque peu refroidie, on coule dans un deuxième temps un bitume-polymère 3. On a ici illustré une variante selon laquelle les bitumes-polymères 3, 3' des couches du complexe sont différents. Ledit bitume-polymère 3 n'est pas, selon une variante avantageuse, chargé en fines. Avec ledit bitume-polymère 3, on génère, dans le moule 4, une seconde couche 1'b. On laisse refroidir ladite seconde couche 1'b.

A l'issue de cette étape du procédé, on obtient un complexe 1b de l'invention, à l'envers, dans son moule de fabrication (Figure 2B).

Ledit complexe 1b doit encore être démoulé et retourné, pour son utilisation, sur une surface 5. Il présente alors sa couche inférieure 1'b, en bitume-polymère 3 exempt de fines, et sa couche supérieure 1"b en un béton bitumineux coulé original de l'invention. Lesdites deux couches 1'b et 1"b ne sont pas parfaitement individualisées, mais elles le sont, en tout état de cause, plus que les deux couches 1'a et 1"a du complexe 1a de la figure 1C (Figure 2C).

Figures 3A, 3B, 3C

Dans un moule 4, on coule un bitume-polymère 3, pour générer une première couche 1'c. Ledit bitume-polymère 3 n'est pas, selon une variante avantageuse, chargé en fines. Ledit bitume-polymère 3 est laissé à refroidir (Figure 3A).

Sur la couche 1'c ainsi générée, quelque peu refroidie, on coule dans un deuxième temps, un mélange apte à générer un béton bitumineux coulé (de l'invention). Ledit mélange résulte du malaxage à chaud du même bitume-polymère 3 (selon la variante illustrée) et d'une charge minérale 2 + 2', pauvre en fines 2'. Le bitume-polymère 3 intervient ici aussi en une quantité à peine supérieure à celle nécessaire au remplissage des vides de ladite charge minérale 2 + 2'. Ledit mélange est laissé à refroidir. Il génère la seconde couche 1"c. A l'issue de cette étape du procédé, on obtient un complexe de l'invention 1c, à l'endroit, dans son moule de fabrication (Figure 3B).

Ledit complexe 1c peut être démoulé et utilisé (sans retournement) sur une surface 5. Il présente une structure tout à fait analogue à celle du complexe 1b de la figure 2C (Figure 3C).

Figures 4A et 4B

Un complexe du même type 1c' = 1'c' + 1"c' est directement préparé sur une surface 5, en fait sur un écran d'indépendance 6, positionné sur ladite surface 5. Les deux étapes, pour l'obtention des deux couches 1'c' et 1"c' successives, sont identiques à celles mises en oeuvre dans le moule 4 pour l'obtention des couches 1'c et 1"c du complexe 1c.

On se propose enfin d'illustrer l'invention par les 4 exemples ci-après. Ces 4 exemples illustrent les 4 modes de préparation d'un complexe de l'invention. Ils sont mis en oeuvre avec les matières premières ci-après :

**1. Bitume-polymère :**

Les proportions, en poids, du mélange des bitumes et du polymère sont les suivantes :

| | | |
|---|---|---|
| Bitume 70/30 | | 75 % |
| Bitume oxydé 100/40 | | 12 % |
| Polymère Styrène Butadiène (en étoile) commercialisé sous la dénomination CARIFLEX 1101 | | 13 % |
| | Total | 100 % |

La densité du bitume-polymère est voisine de 1.

**2. Charge minérale :**

Granulat de diorite dans la classe granulaire 0,63 mm/1,60 mm.

98 % des granulats sont entre 0,63 mm et 1,60 mm.

2 % des granulats sont compris entre 0 et 0,63 mm.

La teneur en fines (dimension inférieure ou égale à 0,080 mm) est 0,5 %. (% en poids)

Densité de la diorite = 2,3

Pourcentage de vides des granulats = 30 % (% en volume).

Exemple 1

On prépare une plaque bi-face (bi-couche) de 15 mm d'épaisseur totale, dont la couche inférieure, souple et élastique, a une épaisseur d'environ 3 mm et dont la couche supérieure, dure, anti-poinçonnante, a une épaisseur d'environ 12 mm. Ladite plaque est obtenue par une unique opération de coulage du béton bitumineux dans un moule.

Ladite plaque est du type schématisé sur la figure 1C. Elle est obtenue selon le procédé des figures 1A, 1B, 1 C.

Les constituants du bitume-polymère sont tout d'abord mélangés à une température de 180-190°C. Dans le mélange, on incorpore la charge minérale, par malaxage, en maintenant la même température.

[Les quantités d'intervention, du bitume-polymère et de la charge minérale, ont préalablement été calculées (pour que le bitume-polymère remplisse les vides de la charge minérale et génère une couche supérieure d'une épaisseur d'environ 3 mm). Le calcul est résumé ci-après.

Masse de bitume-polymère pour 1m$^2$:

$$(0,003 + 0,30 \times 0,012) \times 1000 = 6,60 \text{ kg/m}^2$$

Masse de la charge minérale pour 1 m$^2$ :

$$0,70 \times 0,012 \times 2,30 \times 1000 = 19,32 \text{ kg/m}^2$$

Masse totale du produit pour 1 m$^2$ :

$$6,60 + 19,32 = 25,92 \text{ kg/m}^2$$

Proportion en poids du bitume-polymère :

$$6,60 / 25,92 = 0,2546, \text{ soit environ } 25,5 \%$$

Proportion en poids de la charge minérale :

$$\text{Environ } (100 - 25,5) = 74,5 \%].$$

Le mélange bitume-polymère/charge minérale contient donc 25,5 % en poids de bitume-polymère et 74,5 % en poids de charge minérale.

Ledit mélange (béton bitumineux) obtenu par malaxage de ces constituants est coulé à une température de 180-190°C dans un moule de 15 mm de profondeur, à fond plat et calorifugé.

Les granulats, sauf leurs fines résiduelles, décantent à la partie inférieure dudit moule.

Après refroidissement puis démoulage, on obtient une plaque monobloc de 15 mm d'épaisseur composée sur une face d'une épaisseur d'environ 3 mm de bitume-polymère faiblement chargé en fines et sur l'autre face d'une épaisseur d'environ 12 mm de granulats 0,63/1,60 dans une matrice de bitume-polymère faiblement chargé en fines.

Exemple 2

On prépare une plaque similaire (toutefois sans fines dans sa couche inférieure), en mettant en oeuvre deux opérations de coulage.

Ladite plaque est du type schématisé sur la figure 2C. Elle est obtenue selon le procédé des figures 2A, 2B, 2C.

Les constituants du bitume-polymère sont tout d'abord mélangés à une température de 180-190°C. Dans le mélange, on incorpore la charge minérale, par malaxage, en maintenant la même température.

[Les quantités d'intervention, du bitume-polymère et de la charge minérale, ont préalablement été calculées (pour que la quantité de bitume-polymère soit à peine supérieure à celle nécessaire pour remplir les vides de la charge minérale). Ledit calcul est résumé ci-après.

Masse de bitume-polymère pour 1 m$^2$ :

$$0,30 \times 0,012 \times 1 \times 1000 = 3,60 \text{ kg/m}^2$$

Masse de charge minérale pour 1 m$^2$ :

$$0,70 \times 0,012 \times 1000 = 19,32 \text{ kg/m}^2$$

Masse totale du béton bitumineux :

$$3,60 + 19,32 = 22,92 \text{ kg/m}^2$$

Proportion en poids du bitume-polymère dans le béton bitumineux :

$$3,60/22,92 = 0,1571 \text{ soit } 15,71 \text{ \% arrondis à } 16,0 \text{ \%}$$

Proportion en poids de la charge minérale dans le béton bitumineux :

$$100 - 16 = 84 \text{ soit } 84,0 \text{ \%}].$$

Le mélange bitume-polymère/charge minérale contient donc 16 % en poids de bitume-polymère est 84 % en poids de charge minérale.

Ce mélange - béton bitumineux - est coulé à la température de 180-190°C, sur une épaisseur de 12 mm, dans un moule à fond plat de 15 mm de profondeur.

Il a laissé, à refroidir, dans ledit moule, jusqu'à ce que sa température ait atteint 90-100°C.

On coule alors dessus du bitume-polymère, maintenu à une température d'environ 180°C, jusqu'à ce que le moule soit complètement rempli.

On laisse refroidir jusqu'à la température ambiante. A l'issue de ce refroidissement, le produit est prêt à être démoulé.

Après démoulage, on obtient une plaque monobloc de 15 mm d'épaisseur qui est composée sur une face d'une épaisseur de bitume-polymère exempt de fines d'environ 3 mm d'épaisseur et sur l'autre face d'une épaisseur d'environ 12 mm de granulats 0,63/1,60 dans une matrice de bitume-polymère faiblement chargé en fines.

Exemple 3

On opère comme dans l'exemple 2 mais en intervertissant les couches, en intervertissant les deux opérations de coulage.

La plaque obtenue est du type schématisée sur la figure 3C. Elle est obtenue selon le procédé des figures 3A, 3B, 3C.

On coule une épaisseur de 3 mm de bitume-polymère, à une température d'environ 180°C, dans un moule à fond plat de 15 mm de profondeur.

Le moule est équipé en sous-face de tubulures de refroidissement dans lesquelles peut circuler de l'eau froide. Ce dispositif permet ultérieurement de refroidir plus rapidement la plaque lors de la deuxième phase de coulage.

On laisse refroidir jusqu'à température ambiante.

On coule le béton bitumineux (16 % en poids de bitume-polymère et 84 % en poids de charge minérale) dans le moule par dessus la première couche jusqu'à remplissage complet du moule. Pendant cette phase de coulage, la température du bitume-polymère de la première couche est maîtrisée par la circulation d'eau froide dans les tubulures situées en sous-face du moule de façon que la température du bitume-polymère reste inférieure à 100°C.

On laisse refroidir ensuite le béton bitumineux jusqu'à température ambiante en maintenant la circulation d'eau froide.

Lorsque sa température a atteint la température ambiante, la plaque est prête à être démoulée.

Après démoulage, on obtient une plaque bi-face (bi-couche) identique à celle produite à l'exemple 2 (la plaque 1b de la figure 2C étant identique à la plaque 1c de la figure 3C).

Exemple 4

On génère *in situ*, sur un support en béton à peu près horizontal, des plaques d'un complexe de l'invention. Lesdites plaques sont obtenues par coulage successifs des deux couches (voir les figures 4A et 4B).

Le support est avantageusement apprêté, de façon classique, par exemple par application d'un enduit d'imprégnation à froid pour des plaques adhérentes au support ou mise en place d'un écran d'indépendance usuel (papier, voile de verre,...) pour des plaques indépendantes du support.

Sur le support béton ainsi apprêté, on coule une épaisseur d'environ 3 mm de bitume-polymère à une température d'environ 160°C. Le bitume-polymère est transporté et mis en oeuvre avec le matériel usuellement utilisé pour le répandage des liants. Il refroidit, naturellement.

On prépare, indépendamment, un béton bitumineux, identique à celui utilisé dans les exemples 2 et 3 (16 % en poids de bitume-polymère, 84 % en poids de charges minérales).

Ledit béton bitumineux est approvisionné par camion malaxeur.

On coule, à une température de 180-190°C, une épaisseur de béton bitumineux d'environ 12 mm directement sur la première couche. Le coulage est fait par plaques alternées, encadrées par des règles guides métalliques de 12 mm d'épaisseur.

**Revendications**

1.  Complexe d'étanchéité (1a ; 1b ; 1c ; 1c') comportant deux couches, une couche inférieure élastique (1'a ; 1'b ; 1'c ; 1'c') et une couche supérieure apte à supporter les charges (1"a ; 1"b ; 1"c ; 1"c'), **caractérisé en ce que** :
    + ladite couche inférieure (1'a ; 1'b ; 1'c ; 1'c') est en un bitume-polymère (3), dont la teneur en fines (2') est inférieure à 20 % en poids, avantageusement inférieure à 15 % en poids, et très avantageusement voisine de ou égale à 0 % ; et **en ce que** :
    + ladite couche supérieure (1"a ; 1"b ; 1"c ; 1"c') est du type béton bitumineux coulé, à base d'un bitume-polymère (3 ; 3') et d'une charge minérale (2 + 2') à faible teneur en fines (2'), de sorte que le poids total de fines (2') contenues dans ladite couche supérieure (1"a ; 1"b ; 1"c ; 1"c') représente moins de 20 %, avantageusement moins de 15 %, du poids dudit bitume-polymère (3 ; 3') de ladite couche supérieure (1"a ; 1"b ; 1"c ; 1"c').

2.  Complexe d'étanchéité (1a ; 1b ; 1c ; 1c') selon la revendication 1, **caractérisé en ce que** le poids total de fines (2') contenues dans lesdites couches inférieure (1'a ; 1'b ; 1'c ; 1'c') et supérieure (1"a ; 1"b ; 1"c ; 1"c') représente, respectivement, au plus 10 %, avantageusement au plus 5 %, du poids desdits bitumes-polymères (3 ; 3') desdites couches inférieure (1'a ; 1'b ; 1'c ; 1'c') et supérieure (1"a ; 1"b ; 1"c ; 1"c')

3.  Complexe d'étanchéité (1a ; 1b ; 1c ; 1c') selon l'une des revendications 1 ou 2, **caractérisé en ce qu'**au moins 95 % en poids de la charge minérale (2 + 2') du béton bitumineux coulé constitutif de ladite couche supérieure (1"a ; 1"b ; 1"c ; 1"c') a une granulométrie d/D, avec d ≥ 10 % de l'épaisseur dudit complexe (1a ; 1b ; 1c ; 1c') et D ≤ 50 % de ladite épaisseur et **en ce qu'**au plus 2 % en poids, avantageusement au plus 1 % en poids, de ladite charge minérale (2 + 2') est constitué de fines (2').

4.  Complexe d'étanchéité (1a ; 1b ; 1c ; 1c') selon l'une quelconque des revendications 1 à 3, **caractérisé en ce que** lesdits bitumes-polymères (3 ; 3') sont choisis parmi les bitumes-SBS, les bitumes-polyoléfines tels les bitumes-polybutylène et les bitumes-polypropylène atactique, et leurs mélanges.

5.  Complexe d'étanchéité (1a ; 1b ; 1c ; 1c') selon l'une quelconque des revendications 1 à 4, **caractérisé en ce que** le même bitume-polymère (3 ou 3') intervient dans lesdites couches inférieure (1'a ; 1'b ; 1'c ; 1'c') et supérieure (1"a; 1"b ; 1'c ; 1"c').

6.  Complexe d'étanchéité (1a ; 1b ; 1c ; 1c') selon l'une quelconque des revendications 1 à 5, **caractérisé en ce qu'**il présente une structure parfaitement continue.

7. Procédé pour la préparation d'un complexe d'étanchéité (1b ; 1c) selon l'une quelconque des revendications 1 à 5, **caractérisé en ce qu'**il comprend :

   - la coulée d'un mélange apte à générer un béton bitumineux coulé, résultant du malaxage à chaud d'une charge minérale adéquate (2 + 2') et d'un bitume-polymère (3'), ledit bitume-polymère (3') intervenant en une quantité égale ou à peine supérieure à celle nécessaire au remplissage des vides de ladite charge minérale (2 + 2'), dans un moule (4), pour générer une première couche (1"b) ;
   - le refroidissement partiel de ladite première couche (1"b) ;
   - la coulée sur ladite première couche (1"b) d'un bitume-polymère (3) ;
   - le refroidissement du complexe bi-couche (1'b + 1"b) ainsi obtenu ;
   - son démoulage ; ou **en ce qu'**il comprend :

   - la coulée dans un moule (4) d'un bitume-polymère (3) pour générer une première couche (1'c),
   - le refroidissement partiel dudit bitume-polymère (3),
   - la coulée sur ladite première couche (1'c) en ledit bitume-polymère (3) d'un mélange apte à générer un béton bitumineux coulé, résultant du malaxage à chaud d'une charge minérale adéquate (2 + 2') et d'un bitume-polymère (3), ledit bitume-polymère (3) intervenant en une quantité égale ou à peine supérieure à celle nécessaire au remplissage des vides de ladite charge minérale (2 + 2') ;
   - le refroidissement du complexe bi-couche (1'c + 1"c) ainsi obtenu,
   - son démoulage.

8. Procédé pour la préparation d'un complexe d'étanchéité (la) selon la revendication 6, **caractérisé en ce qu'**il comprend :

   - le malaxage à chaud d'une charge minérale adéquate (2 + 2') et d'un bitume-polymère (3), ledit bitume-polymère (3) intervenant en une quantité excédentaire par rapport à celle nécessaire au remplissage des vides de ladite charge minérale (2 + 2') ;
   - la coulée du mélange résultant dans un moule (4) ;
   - le refroidissement contrôlé dudit mélange dans ledit moule (4), contrôlé pour autoriser la décantation de ladite charge minérale (2 + 2') et donc l'apparition d'une couche supérieure (1'a) de bitume-polymère (3) quasi exempte de ladite charge minérale (2 + 2') ;
   - le démoulage du complexe bi-couche (1'a + 1"a) ainsi obtenu.

9. Procédé de revêtement d'une surface (5) en vue de la protéger et généralement de l'étancher, **caractérisé en ce qu'**il comprend le revêtement de ladite surface (5) avec un complexe d'étanchéité (1a ; 1b ; 1c) selon l'une quelconque des revendications 1 à 6, ou **en ce qu'**il comprend la préparation *in situ,* sur ladite surface (5), d'un tel complexe (1c') ; ladite préparation incluant essentiellement :

   - la coulée d'un bitume-polymère (3) pour générer une couche inférieure (1'c') ;
   - le refroidissement partiel dudit bitume-polymère (3) ;
   - la coulée sur ladite couche inférieure (1'c') d'un mélange apte à générer un béton bitumineux coulé, résultant du malaxage à chaud d'une charge minérale adéquate (2 + 2') et d'un bitume-polymère (3) ; ledit bitume-polymère (3) intervenant en une quantité égale ou à peine supérieure à celle nécessaire au remplissage des vides de ladite charge minérale (2 + 2') ;
   - le refroidissement du complexe (1'c' + 1"c') ainsi généré *in situ*.

10. Procédé selon la revendication 9, **caractérisé en ce que** ladite surface (5) est préalablement revêtue d'un écran d'indépendance (6).

11. Procédé selon l'une quelconque des revendications 7 à 10, **caractérisé en ce que** la charge minérale intervenant renferme moins de 2 %, avantageusement moins de 1 % en poids, de fines (2').

12. Béton bitumineux coulé, essentiellement composé d'un liant bitumineux et d'une charge minérale, **caractérisé en ce que** ledit liant bitumineux est un bitume-polymère et **en ce que** ladite charge minérale est à faible, teneur en fines, de sorte que le poids total desdites fines dans ledit liant bitumineux représente moins de 20 %, avantageusement moins de 15 %, du poids dudit liant bitumineux.

**13.** Béton bitumineux coulé selon la revendication 12, **caractérisé en ce que** ladite charge minérale est à faible teneur en fines, de sorte que le poids total desdites fines dans ledit liant bitumineux représente au plus 10 %, avantageusement au plus 5 %, du poids dudit liant bitumineux.

FIG.1A  FIG.1B  FIG.1C
FIG.2A  FIG.2B  FIG.2C
FIG.3A  FIG.3B  FIG.3C
FIG.4A  FIG.4B